# EUROPÄISCHE PATENTSCHRIFT

(11) **EP 0 939 305 B1**
(45) Veröffentlichungstag und Bekanntmachung des Hinweises auf die Patenterteilung: **08.11.2006**
(21) Anmeldenummer: 98121632.8
(22) Anmeldetag: 12.11.1998
(51) Int. Cl.: G01F 1/698

(54) **Temperaturregler**
Temperature controller
Contrôleur de température

(30) Priorität: 27.02.1998 DE 19808250
(43) Veröffentlichungstag der Anmeldung: 01.09.1999
(73) Patentinhaber: TEXAS INSTRUMENTS HOLLAND B.V., 7602 EM Almelo (NL)
(72) Erfinder: Liedtke, Günter, 45239 Essen (DE); Wienecke, Thomas, 41352 Korschenbroich (DE)
(74) Vertreter: von Kirschbaum, Alexander

(56) Entgegenhaltungen:
- DE-A- 3 433 368
- DE-A- 3 722 385
- DE-A- 4 130 513
- US-A- 4 571 991

## Beschreibung

Die Erfindung betrifft einen Temperaturregler, insbesondere für einen Luftmassenstrommesser nach dem Oberbegriff des Patentanspruchs 1.

Luftmassenstrommesser werden insbesondere zur Bestimmung der Ansaugluftmassen einer Brennkraftmaschine verwendet. Für die Ausführung von Luftmassenstrommessern werden dazu in bekannter Art und Weise Heißelement-Anemometer, auch als thermische Luftmassenstrommesser bezeichnet, verwendet. Zwei Sensoren bzw. Fühler, von denen einer die Temperatur der angesaugten Luft erfaßt und der andere auf eine bestimmte Temperatur durch die Umgebungstemperatur aufgeheizt wird, liegen in verschiedenen Zweigen einer Brückenschaltung. Der als Meßsonde dienende aufgeheizte Fühler wird durch den Luftstrom abhängig von dessen Geschwindigkeit und Temperatur abgekühlt. Der zum Brückenabgleich erforderliche zusätzliche Energiebetrag ist dann ein Maß für die durchgesetzte Luftstrommasse. Bei größeren Abweichungen von einer Bezugstemperatur entstehen jedoch Meßfehler, bedingt durch die sich mit der Temperatur ändernde thermische Leitfähigkeit der Luft.

Es ist bekannt, zur Kompensierung dieses Meßfehlers, beispielsweise einen dritten Sensor zu verwenden, wie in der DE 37 22 385 A1 offenbart. Dabei wird durch geeignete Auslegung des Grundwiderstandswertes und dessen Temperaturkoeffizienten der temperaturabhängige Meßfehler korrigiert.

Eine Temperaturregelschaltung zur Erzielung einer konstanten Übertemperatur eines Heizwiderstandes in einem thermischen Luftmassenstrommesser offenbart die DE 41 30 513 C2. Auch hierbei sind ein die Umgebungstemperatur umfaßender hochohmiger Meßwiderstand und ein Heizwiderstand in zwei verschiedenen Brückenzweigen einer Brückenschaltung angeordnet. Durch eine geeignete Wahl der Widerstandsverhältnisse zueinander wird erreicht, daß der Heizwiderstand sich aufheizt, um die Brücke ins Gleichgewicht zu bringen. Der Brückenzweig mit dem Temperaturwiderstand ist wesentlich hochohmiger auszubilden als der Brückenzweig mit dem Heizwiderstand und die Eigenerwärmung des Temperaturwiderstandes vernachlässigbar klein zu halten, um thermische Meßfehler auszuschließen. Nachteilig ist, daß dazu der hochohmige Temperaturwiderstand einen großen Platzbedarf auf einem Sensor aufweist.

Die Aufgabe der Erfindung besteht darin, einen Temperaturregler anzugeben, der bei Einhaltung der Brückenbedingungen in seinen Abmaßen reduziert ist.

Gelöst wird die Aufgabe durch die Merkmale des Patentanspruchs 1.

Der Erfindung liegt die Idee zugrunde, trotz der Bedingung, daß ein Brückenzweig gegenüber dem anderen hochohmig zu gestalten ist, die eigentlichen Widerstandswerte zu reduzieren, wodurch auch die Abmessungen klein gehalten werden können.
Dieses erfolgt dadurch, daß durch zusätzliche Mittel eine Spannungsreduzierung in beiden Brückenzweigen geschaffen wird. Bei einer kleineren Speisespannung kann demzufolge der Widerstandswert des Widerstandstemperatursensors reduziert werden, wodurch sich auch die Abmaße des Widerstandstemperatursensors reduzieren. Dieselbe Reduzierung der Spannung erfolgt im anderen Brückenzweig mit einem Heizwiderstand, um ein Gleichgewicht der Brücke zu behalten. Danach erfolgt in bekannter Art und Weise durch einen Operationsverstärker eine Nachregelung des Heizwiderstandes bei Ungleichgewicht in der Brücke, die durch eine erhöhte Temperatur am Widerstandstemperatursensor hervorgerufen wird. Dazu haben der Widerstandstemperatursensor und der Heizwiderstand gleichartig temperaturabhängig veränderliche Widerstandswerte. Die den Brückennullzweig bildenden Mittelabgriffe der beiden Brückenzweige sind mit den positiven und den negativen Eingang des Operationsverstärkers verbunden.

Vorteilhafte Ausführungen sind in den Unteransprüchen enthalten. Durch die Wahl der kleineren Widerstandswerte und damit verbunden den geringen Abmessungen des Widerstandstemperatursensors und des Heizwiderstandes können diese auch doppelt auf einem gemeinsamen Träger aufgebracht werden, wodurch in einfacher Art und Weise mit dieser Anordnung gleichfalls die Strömungsrichtung ermittelt werden kann.

Anhand eines Ausführungsbeispiels mit Zeichnung soll die Erfindung näher erläutert werden.

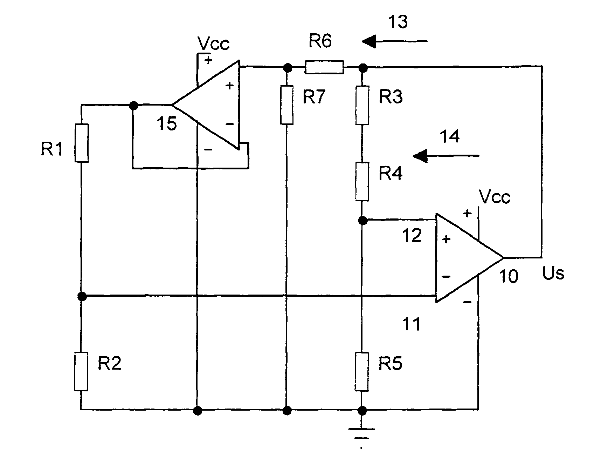

Es zeigt die einzige Figur einen Schaltungsausschnitt eines Temperaturreglers.

Dabei wurden nur die wesentlichen Bauelemente berücksichtigt, die für das Verständnis der Funktionsweise notwendig sind.
Gemäß der einzigen Figur weist ein Temperaturregler 1 eine Brückenschaltung in einem Brückenzweig einen hochohmigen ohmschen temperaturabhängig veränderlichen und nur die Umgebungstemperatur erfassenden Meßwiderstand R1 in Reihe zu einem ohmschen Widerstand R2 auf. In einem zweiten Brückenzweig befindet sich ein temperaturabhängig veränderlicher ohmscher Heizwiderstand R3 in Reihe zu einem ohmschen Widerstand R5. Die Widerstände R1 und R3 haben positive Temperaturkoeffizienten und eine möglichst übereinstimmende Temperaturabhängigkeit. Zusätzlich zu dieser bekannten Anordnung weist der Temperaturregler 1 erfindungsgemäß Mittel 13 auf, die die Eingangsspannung am Widerstandstemperatursensor R1 reduzieren. Diese Mittel 13 bestehen aus einem Spannungsteiler mit den Widerständen R6 und R7 sowie einem Spannungsfolger 15. Der Spannungsfolger 15 ist dabei vor dem Meßwiderstand R1 und in Reihe zum Widerstand R6 geschaltet, während der andere Widerstand R7 parallel zum Spannungsfolger 15 sowie den Widerständen R1, R2 in die Brückenschaltung eingebunden ist. Im zweiten Brückenzweig ist als zusätzliches Mittel 14 ein Widerstand R4 zwischen den Widerständen R3 und R5 in Reihe liegend eingebunden. Die Mittelabgriffe zwischen den Widerständen R1, R2 einerseits und R4, R5 anderseits gehören zum Brückennullzweig und sind mit dem negativen Eingang 11 bzw. dem positiven Eingang 12 eines Operationsverstärkers 10 verbunden. Die Brückenelektronik wird von einer Versorgungsspannungsquelle V_{cc} gespeist und ist einseitig an die elektrische Masse angeschlossen, wobei die Widerstände R2, R7 und R5 ein gemeinsames Massebezugspotential haben.

Die Speisespannung U_{S} des ersten Brückenzweiges, d. h. des Meßzweiges mit den temperaturmessenden Widerstandes R1 wird durch die als Spannungsteiler wirkenden Widerstände R6 und R7 reduziert, wobei das Widerstandsverhältnis beider Widerstände R6, R7 einen Faktor k bestimmt, um den die Speisespannung U_{S} minimiert wird. Dieser Faktor k ergibt sich aus k = R7 ./. (R6 + R7) und ist stets kleiner 1. Um diesen Faktor k wird die Speisespannung U_{cc} im ersten Brückenzweig reduziert und auf den Spannungsfolger 15 gegeben. Der Spannungsfolger 15, auch Impedanzwandler genannt, ist ein derartig gegengekoppelter Gleichstromverstärker, daß seine Ausgangsspannung gleich seiner Eingangsspannung ist, und dient zur Entkopplung des Widerstandstemperatursensors R1 vom Spannungsteiler R6, R7, um eine Verfälschung des Spannungsteilerverhältnisses zu vermeiden. Zur Einhaltung des Brückengleichgewichtes wird das Widerstandsverhältnis der Widerstände R4 zu R5 gleichfalls so eingestellt, daß die Ausgangsspannung des anderen Brückenzweiges mit demselben Faktor k multipliziert wird und somit im normalen Zustand zwischen den Brückenabgriffen keine Differenz eintritt.

In bekannter Art und Weise erfolgt eine Temperaturnachregelung wenn eine Störung die Temperatur des Heizwiderstandes R3 absinken oder ansteigen läßt, also auch sein Widerstandswert sich verändert. Diese Temperaturregelung erfolgt über den Operationsverstärker 10. Diese Nachregelung erfolgt je nach Schaltung unterschiedlich und ist individuell gestaltbar. So kann zwischen der Versorgungsspannungsquelle V_{cc} und der Brückenschaltung ein Stelltransistor (nicht dargestellt) eingebunden werden, auf den der Operationsverstärker 10 derart einwirkt, daß der Stelltransistor weiter öffnet oder weiter schließt. Es ist aber auch möglich, den Ausgang des Operationsverstärkers 10 direkt auf den Brückenschaltungspunkt vor den Widerständen R6 und R7 zu geben. Auf diese Weise erfolgt die Regelung immer so, daß die Temperaturdifferenz zwischen R3 und R1 konstant gehalten wird.

Mit dem Temperaturregler kann beispielsweise ein Luftmassenstrommesser im Luftansaugkanal eines Verbrennungsmotors betrieben werden, wobei das Heizglied des Luftmassenstrommessers dem Heizwiderstand R3 der Schaltung entspricht. Wenn dessen Übertemperatur konstant gehalten wird, kann aus dem Heizstrom oder einer anderen hiermit verknüpften Größe auf die Größe des Luftstromes geschlossen werden.
Dabei nimmt der Widerstandstemperatursensor 1 einen Widerstandswert an, der die Temperatur des strömenden Mediums charakterisiert. Je nach Masse der vorbeiströmenden Luft wird der Widerstandstemperatursensor R1 mehr oder weniger abgekühlt, was zu einer Verstimmung bzw. zu einem Ungleichgewicht der Brückenschaltung führt. Der zur Ausregelung notwendige Strom ist dann ein Maß für die an dem Widerstandstemperatursensor R1 vorbeiströmende Luftmasse.

Der Temperaturregler 1 kann vielfältig abgewandelt werden. So können die Widerstände R1 und R3 alternativ negative Temperaturkoeffizienten haben, müßten dann aber an den Eingängen 11, 12 vertauscht werden.

## Patentansprüche

1. Temperaturregler, insbesondere für einen Luftmassenstrommesser im Luftansaugkanal einer Verbrennungskraftmaschine, zum Erzielen einer konstanten Übertemperatur eines Heizwiderstandes, mit einer ohmschen Brückenschaltung, in deren einem Brückenzweig ein die Umgebungstemperatur erfassender Meßwiderstand und in deren anderem Brückenzweig der Heizwiderstand angeordnet sind, wobei die den Brückennullzweig bildenden Mittelabgriffe der beiden Brückenzweige mit den positiven und dem negativen Eingang eines Operationsverstärkers verbunden sind, der in Abhängigkeit von einer Spannungsdifferenz im Brückennullzweig ein Brückengleichgewicht ausregelt, **dadurch gekennzeichnet, daß** Mittel (13) zur Spannungsreduzierung am Meßwiderstand (R1) vor den Meßwiderstand (R1) angeschlossen sind, wodurch die Spannung in dem Brückenzweig des Meßwiderstandes (R1) um einen Faktor (k) reduziert wird und weitere Mittel (14) zur Spannungsreduzierung um denselben Faktor (5) im anderen Brückenzweig nach dem Heizwiderstand (R3) vorgesehen sind, um die Einhaltung des Brückengleichgewichts zu realisieren.

2. Temperaturregler nach Anspruch 1, **dadurch gekennzeichnet, daß** die Mittel (13) im Meßbrückenzweig aus einem Spannungsteiler (R6, R7) sowie einem Spannungsfolger (15) gebildet sind, wobei der Spannungsfolger (15) vor den Meßwiderstand (R1) und in Reihe zu dem ersten Widerstand (R6) des Spannungsteilers angeordnet ist und der zweite Widerstand (R7) des Spannungsteilers parallel zum Spannungsfolger (15) sowie zu den Brückenwiderständen (R1, R2) liegt.

3. Temperaturregler nach Anspruch 1, **dadurch gekennzeichnet, daß** das weitere Mittel (14) im Brückenzweig des Heizwiderstandes (R3) ein weiterer, in Reihe zu diesem liegender Widerstand (R4) ist, der zusammen mit einem in diesem Brückenzweig befindlichen Brückenwiderstand (R5) gleichfalls einen Spannungsteiler (R4, R5) bildet, wobei der Brückenabgriff zwischen dem zusätzlichen Widerstand (R4) und dem Brückenwiderstand (R5) liegt.

## Claims

1. Temperature controller, especially for an air-mass flow meter in an air intake channel of an internal combustion engine, to obtain a constant excess temperature of a heating resistor, comprising an ohmic bridge circuit, one bridge branch being provided with a measuring resistor sensing the ambient temperature, the other bridge branch being provided with the heating resistor, the center taps of the two bridge branches forming the zero branch of the bridge being connected with the positive and the negative input of an operational amplifier that adjusts a bridge balance in dependence on a voltage difference in the zero branch of the bridge, **characterized in that** means (13) for reducing voltage at the measuring resistor (R1) are connected upstream of the measuring resistor (R1), whereby the voltage in the bridge branch of the measuring resistor (R1) is reduced by a factor (k), and further means (14) for reducing voltage by the same factor (5) are provided in the other bridge branch downstream of the heating resistor (R3) to realize the maintenance of the bridge balance.

2. The temperature controller of claim 1, **characterized in that** the means (13) in the measuring branch of the bridge are formed by a voltage divider (R6, R7) and a follower stage (15), the follower stage (15) being arranged upstream of the measuring resistor (R1) and in series with the first resistor (R6) of the voltage divider, the second resistor (R7) of the voltage divider being parallel to the follower stage (15) and the bridge resistors (R1, R2).

3. The temperature controller of claim 1, **characterized in that** the further means (14) in the bridge branch of the heating resistor (R3) is a further resistor (R4) in series connection therewith which, together with a bridge resistor (R5) provided in this bridge branch, also forms a voltage divider (R4, R5), the bridge tap being situated between the additional resistor (R4) and the bridge resistor (R5).

## Revendications

1. Régulateur de température, en particulier pour un dispositif de mesure de flux massique d'air dans le conduit d'aspiration d'air d'un moteur à combustion interne, en vue de l'obtention d'une température d'échauffement constante d'une résistance chauffante, comprenant un circuit ohmique en pont, dans une branche de pont duquel est disposée une résistance de mesure détectant la température ambiante et dans l'autre branche du pont duquel est disposée la résistance chauffante, les prises intermédiaires des deux branches de pont, qui définissent la branche neutre du pont, étant alors reliées à l'entrée positive et à l'entrée négative d'un amplificateur opérationnel, qui réalise le réglage d'un équilibre du pont en fonction d'une différence de tension dans la branche neutre du pont, **caractérisé en ce que** des moyens (13) de réduction de tension sont raccordés à la résistance de mesure (R1), en amont de la résistance de mesure (R1), grâce à quoi la tension dans la branche de pont de la résistance de mesure (R1) est réduite d'un certain facteur (k), et des moyens supplémentaires (14) sont prévus en aval de la résistance chauffante (R3) pour réduire la tension du même facteur (5) dans l'autre branche de pont, afin d'assurer la conservation de l'équilibre du pont.

2. Régulateur de température selon la revendication 1, **caractérisé en ce que** les moyens (13), présents dans la branche de mesure du pont, sont formés d'un diviseur de tension (R6, R7) et d'un suiveur de tension (15), le suiveur de tension (15) étant disposé en amont de la résistance de mesure (R1) et en série avec la première résistance (R6) du diviseur de tension, alors que la deuxième résistance (R7) du diviseur de tension est placée en parallèle sur le suiveur de tension (15) ainsi que sur les résistances (R1, R2) du pont.

3. Régulateur de température selon la revendication 1, **caractérisé en ce que** le moyen supplémentaire (14), présent dans la branche de pont de la résistance chauffante (R3), est une résistance supplémentaire (R4) placée en série avec cette dernière et qui, conjointement avec une résistance de pont (R5) se trouvant dans cette branche de pont, forme également un diviseur de tension (R4, R5), la prise du pont étant alors située entre la résistance additionnelle (R4) et la résistance de pont (R5).
